# FASCICULE DE BREVET EUROPEEN

(11) **EP 1 667 934 B1**
(45) Date de publication et mention de la délivrance du brevet: **16.02.2011**
(21) Numéro de dépôt: 04816194.7
(22) Date de dépôt: 07.09.2004
(51) Int. Cl.: C01B 33/20, C01B 33/24, C01B 33/32, C01B 33/187, C03B 3/02, C03B 5/235, C03C 1/02

(54) **PREPARATION DE SILICATE DANS UN FOUR A BRULEURS IMMERGES EN MILIEU REDUCTEUR**
HERSTELLUNG VON SILIKAT IN EINEM OFEN MIT IN EIN REDUZIERENDES MEDIUM GETAUCHTEN BRENNERN
PREPARATION OF SILICATE IN A FURNACE WITH BURNERS IMMERSED IN A REDUCING MEDIUM

(30) Priorité: 19.09.2003 FR 0311006; 23.10.2003 FR 0312383; 13.11.2003 FR 0313272
(43) Date de publication de la demande: 14.06.2006
(73) Titulaire: SAINT-GOBAIN GLASS FRANCE, 92400 Courbevoie (FR)
(72) Inventeur: JACQUES, Rémi, Saint-Gobain Recherche, F-93300 AUBERVILLIERS (FR); JEANVOINE, Pierre, Saint-Gobain Glass France, F-92400 COURBEVOIE (FR); PALMIERI, Biagio, Saint-Gobain Recherche, F-93300 AUBERVILLIERS (FR); RATTIER, Mélanie, Saint-Gobain Recherche, F-93300 AUBERVILLIERS (FR)
(74) Mandataire: Colombier, Christian
(86) Numéro de dépôt international: PCT/FR2004/050416
(87) Numéro de publication internationale: WO 2005/028364

(56) Documents cités:
- WO-A-00/46161
- WO-A-03/031357
- US-A- 1 425 048
- US-A- 2 352 738
- US-A- 4 545 800
- US-A- 4 551 161
- US-A- 5 785 940
- WINNACKER, KÜCHLER: "Chemische Technologie, Band 3, Anorganische Technologie" 1983, CARL HANSER VERLAG , MÜNCHEN , XP002277934 page 58-59, paragraphe 2.1.4.2, équation (10) page 82-83, paragraphe 3.3.2.3

## Description

L'invention concerne un procédé de préparation de silicate comme le silicate de sodium que l'on peut utiliser pour fabriquer du verre ou de la silice sous forme de particules (silice précipitée).

Dans le contexte de la présente invention, on comprend par " matières premières " tous les matériaux, matières vitrifiables, minerais naturels ou produits synthétisés, matériaux issus de recyclage du type calcin etc..., qui peuvent entrer dans la composition venant alimenter un four verrier. On comprend par « verre » tout matériau à matrice vitreuse, vitrocéramique ou céramique, dont la silice est le principal constituant. Le terme de " fabrication " comprend l'étape de fusion indispensable des matières premières et éventuellement toutes les étapes ultérieures/complémentaires visant à affiner/conditionner le verre en fusion en vue de sa mise en forme définitive, notamment sous forme de verre plat (vitrages), de verre creux (flacons, bouteilles), de verre sous forme de laine minérale (verre ou roche) utilisée pour ses propriétés d'isolation thermique ou phonique ou même éventuellement de verre sous forme de fils dits textile utilisés dans le renforcement.

L'invention s'intéresse tout particulièrement aux matières premières nécessaires pour fabriquer les verres ayant une teneur significative en alcalin, notamment en sodium, par exemple les verres de type silico-sodo-calcique utilisés pour faire du verre plat. La matière première actuellement la plus fréquemment utilisée pour apporter le sodium ou le potassium est le carbonate de sodium Na₂CO₃ ou le carbonate de potassium K₂CO₃, choix qui n'est pas dénué d'inconvénients. En effet, d'une part ce composé n'apporte que le sodium comme élément constitutif du verre, toute la partie carbonée se décomposant sous forme de dégagements de CO₂ lors de la fusion. D'autre part, il s'agit d'une matière première onéreuse, comparativement aux autres, car c'est un produit de synthèse, obtenu par le procédé Solvay à partir de chlorure de sodium et de calcaire, procédé imposant un certain nombre d'étapes de fabrication et consommant beaucoup d'énergie.

C'est la raison pour laquelle on a proposé d'utiliser comme source de sodium non pas un carbonate mais un silicate, éventuellement sous forme d'un silicate mixte d'alcalins (Na) et d'alcalino-terreux (Ca) que l'on prépare préalablement. L'utilisation de ce type de produit intermédiaire a l'avantage d'apporter conjointement plusieurs des constituants du verre, de supprimer la phase de décarbonatation, et de réduire les émissions de CO₂ du four de fusion. Elle permet également d'accélérer la fusion des matières premières dans leur ensemble, et de favoriser leur homogénéisation en cours de fusion, comme cela est indiqué, par exemple, dans les brevets FR 1211098 et FR 1469109. Cependant, cette voie pose le problème de la fabrication de ce silicate.

Un premier mode de synthèse a été décrit dans le WO 0046161 : il s'agit de convertir un halogénure, par exemple du NaCl, et de la silice en silicate à haute température, l'apport thermique étant fourni à l'aide de brûleurs immergés. La combustion par brûleurs immergés était déjà connue, par exemple des US 3627504, US3260587 ou US4539034, pour assurer la fusion de matières vitrifiables pour faire du verre. Utiliser cette technologie dans le contexte différent de la synthèse de silicates, en amont donc de la fabrication à proprement dite du verre, apporte en effet beaucoup d'avantages: ce mode de combustion provoque au sein des matières en cours de réaction de fortes turbulences, de forts mouvements de convection autour des flammes ou jets de gaz des brûleurs immergés, ce qui favorise un brassage très efficace des réactifs. En outre, les brûleurs immergés apportent directement la chaleur là ou elle est nécessaire, dans la masse des produits en cours de réaction. C'est également un mode de combustion respectueux de l'environnement. La conversion directe de NaCl et de silice faite de cette façon est donc très attractive à plus d'un titre. Cependant, il s'est avéré que cette conversion directe était malaisée à mettre en oeuvre à grande échelle.

Le WO 03031357 enseigne la fabrication de silicate en deux étapes distinctes, la réaction globale faisant intervenir un halogénure (comme du NaCl) et de la silice pour faire un silicate, cette réaction globale passant par la fabrication d'un sulfate. Ce document enseigne que du charbon ou du soufre peut faire office de combustible solide.

L'invention a d'abord pour but la mise au point d'un procédé de fabrication de silicate particulièrement productif et facile à utiliser à l'échelle industrielle. Accessoirement, ce nouveau type de fabrication peut également être respectueux de l'environnement dans la mesure ou tous les produits de réaction impliqués peuvent être valorisés ou recyclés.

On entend par « brûleurs immergés », des brûleurs configurés de manière à ce que les « flammes » qu'ils génèrent ou les gaz de combustion issus de ces flammes se développent dans le réacteur où s'opère la conversion, au sein même de la masse des matières en cours de transformation (masse réactionnelle). Généralement, ils se trouvent disposés de façon à affleurer ou à dépasser légèrement des parois latérales ou de la sole du réacteur utilisé.

L'invention a tout d'abord pour objet un procédé de fabrication de composés à base de silicate(s) d'alcalins, tels que Na, K et/ou d'alcalino-terreux, tels que Ca, Mg, et/ou de terres rares telle que Ce, éventuellement sous forme de silicates mixtes associant au moins deux de ces éléments. Ce procédé fait intervenir une réaction de conversion desdits sulfates avec de la silice en silicates correspondants, l'apport thermique nécessaire à cette conversion étant fourni, au moins en partie, par une réaction de combustion utilisant un ou une pluralité de brûleur(s) immergé(s). On apporte dans le four à brûleurs immergés suffisamment d'énergie thermique pour former le silicate et que celui-ci reste liquide et de suffisamment faible viscosité pour couler suffisamment rapidement hors du four. L'intérêt des brûleurs immergés est d'apporter les calories nécessaires directement dans la masse réactionnelle liquide, cet apport provoquant de plus un brassage efficaces des différentes matières dans le four du fait des turbulences provoquées par les gaz les remuant. Selon l'invention, il est préférable d'apporter l'essentiel de l'énergie par les brûleurs immergés mais il n'est pas exclu non plus d'en apporter une partie par un autre moyen comme des résistances électriques bien que la coexistence de résistances électriques et de brûleurs immergés ne soit pas recommandée (corrosion des résistances). Généralement, un apport calorique compris entre 500 et 2500 KWh par tonne de silicate produit convient.

La combustion par les brûleurs immergés nécessite un apport d'oxygène, soit sous forme d'oxygène pur, soit sous forme d'un mélange d'oxygène et d'au moins un autre gaz comme c'est le cas pour l'air. Cet oxygène est destiné à réagir avec le combustible pour fournir la chaleur nécessaire. Suivant la nature du combustible et la façon dont il est introduit, le combustible peut réagir plus ou moins rapidement avec l'oxygène. Ainsi, si le combustible est un gaz (un hydrocarbure comme le méthane, propane ou butane ou un gaz soufré comme H₂S) alimentant directement le brûleur immergé déjà alimenté en oxygène, la combustion est rapide et l'on estime qu'elle est complète (il convient ici bien entendu que le combustible et l'oxygène arrivent au même point du brûleur immergé, par exemple par une cellule de prémélange). Cela signifie que si le brûleur immergé est alimenté de façon stoechiométrique en oxygène et en gaz combustible, tout le gaz combustible et tout l'oxygène réagissent ensemble. Si par contre, l'oxygène est en excès par rapport à cette stoechiométrie, de l'oxygène s'échappera par les fumées, ce qui est mesurable. Si du gaz combustible est en excès par rapport à cette stoechiométrie, ce combustible aura également tendance à s'échapper, mais il y aura un risque de postcombustion plus ou moins explosive et ce cas de figure n'est donc pas recommandé.

On peut également introduire du combustible solide comme par exemple du soufre solide ou du carbone solide (charbon). Dans ce cas, le combustible solide est généralement introduit dans la cuve réactionnelle comme les matières vitrifiable, c'est-à-dire indépendamment des brûleurs immergés mais tout de même le plus près possible desdits brûleurs si l'on souhaite qu'il réagisse efficacement avec l'oxygène passant par lesdits brûleurs. Cependant, même si l'on introduit ce combustible solide très près des brûleurs immergés, il est difficile d'avoir un rendement de combustion parfait, ce qui signifie que de l'oxygène peut généralement traverser la masse réactionnelle sans réagir complètement avec le combustible et se retrouver dans les fumées (quantité mesurable), et ce, même si le combustible était en stoechiométrie ou même en excès par rapport à l'oxygène.

Selon l'invention, un excès de combustible (ou de réducteur) est introduit par rapport à l'oxygène effectivement consommé (et non pas par rapport à l'oxygène seulement introduit). En effet, la demanderesse a découvert que si le milieu réactionnel est en excès de combustible, la réaction de formation du silicate était activée et pouvait même être réalisée à plus basse température qu'en l'absence de cet excès, ce qui revient également à dire que la réaction de formation du silicate est activée à des températures plus basses qu'en l'absence de cet excès. Il semble que le combustible en excès, non consommé par l'oxygène des brûleurs immergés, joue en fait dans ce cas un rôle direct dans la réaction de formation du silicate, un rôle du type réducteur. Sans que la présente explication ne puisse avoir un effet limitatif, il se pourrait qu'au moins une des réactions suivantes soient alors mises en jeu :

SiO₂ + Na₂SO₄ +½/ C → Na₂SiO₃ + SO₂ + ½ CO₂ (1)

SiO₂ + Na₂SO₄ + ½ S → Na₂SiO₃ + 3/2 SO₂ (2)

la réaction (1) intervenant en présence de combustible au carbone ou générant du carbone comme le charbon, le coke, une matière plastique contenant du carbone (un polymère comme le polyéthylène, polypropylène ou autre), la réaction (2) intervenant en présence de combustible contenant ou générant du soufre. On peut également utiliser un combustible contenant à la fois du carbone et du soufre comme par exemple un caoutchouc vulcanisé (comme des pneus de véhicules automobile).

Selon l'invention, on peut donc notamment être dans l'un des cas suivants :
a) brûleurs immergés alimentés en oxygène (ce qui inclut l'air) et en gaz combustible, le gaz combustible étant en défaut par rapport à l'oxygène et étant complètement consommé par l'oxygène, un combustible solide ou liquide étant par ailleurs ajouté dans la masse réactionnelle, réagissant partiellement avec de l'oxygène mais étant présent en quantité suffisamment importante pour ne pas être complètement consommé par l'oxygène et pour jouer un rôle réducteur au sens de l'invention pour favoriser la formation du silicate, de l'oxygène pouvant éventuellement s'échapper avec les fumées ;
b) brûleurs immergés alimentés en oxygène (ce qui inclut l'air) et en gaz combustible, le gaz combustible étant à la stoechiométrie par rapport à l'oxygène, l'oxygène et le gaz combustible réagissant complètement ensemble, un combustible solide ou liquide ou gazeux (comme H₂S) étant par ailleurs ajouté dans la masse réactionnelle, et jouant un rôle réducteur au sens de l'invention pour favoriser la formation du silicate ;
c) brûleurs immergés alimentés en oxygène (ce qui inclut l'air) sans gaz combustible, un combustible solide ou liquide étant par ailleurs ajouté dans la masse réactionnelle, réagissant avec au moins un partie de l'oxygène mais étant présent en quantité suffisamment importante pour également jouer un rôle réducteur au sens de l'invention pour favoriser la formation du silicate, une partie de l'oxygène s'échappant généralement avec les fumées ;
d) brûleurs immergés alimentés en oxygène (ce qui inclut l'air) et en gaz combustible H₂S, le gaz combustible étant en excès par rapport à l'oxygène et jouant un rôle réducteur par rapport au sulfate favorisant la formation du silicate ;

On voit que dans tous ces cas de figure, on a un excès de combustible dans la masse réactionnelle par rapport à l'oxygène réagissant effectivement. On peut facilement évaluer l'oxygène réagissant effectivement en mesurant l'oxygène s'échappant dans les fumées. L'Homme du métier peut ainsi par des tests de routine, connaissant les quantités d'oxygène ne réagissant pas, évaluer les quantités nécessaires de combustible à introduire pour être en excès de combustible au sens de l'invention.

Notons que les matières dites « combustibles » ou « réductrices » sont bien les mêmes et peuvent jouer ces deux rôles. Le rôle combustible étant joué par réaction avec l'oxygène, le rôle réducteur étant joué dans la réaction de fabrication du silicate. L'excès de combustible au sens de l'invention permet à cette matière combustible d'avoir un rôle réducteur plus important.

Ainsi, l'invention a d'abord pour objet un procédé de préparation de silicate d'un élément choisi parmi les alcalins, alcalino-terreux ou terre rare, comprenant une réaction entre de la silice et un sulfate dudit élément dans un réacteur équipé d'au moins un brûleur immergé dans une masse en fusion, ledit brûleur immergé étant alimenté par un gaz comprenant de l'oxygène, un excès de combustible réducteur étant introduit dans le réacteur par rapport à l'oxygène effectivement consommé.

L'excès de combustible au sens de la présente invention joue un rôle réducteur grâce au carbone ou soufre qu'il contient et qui se combine avec le sulfate de sodium. Pour chaque combustible, il est possible de définir un équivalent carbone ou un équivalent soufre correspondant à la masse de carbone ou de soufre pur que le combustible apporte en réalité en qualité de réducteur. En effet, à titre d'exemple, un polymère hydrocarboné présente une masse plus importante que le carbone qu'il contient et qui joue effectivement un rôle réducteur. L'excès de combustible au sens de la présente invention représente de préférence 0,1 à 2 mole(s) et de manière encore préférée 0,3 à 1 mole d'équivalent carbone ou soufre par mole de sulfate. Ainsi, l'excès de combustible réducteur peut être un solide ou un liquide source de carbone ou source de soufre ou à la fois source de carbone et de soufre. Citons comme combustible solide ou liquide apportant du soufre et/ou du carbone les matières suivantes : les caoutchoucs vulcanisés, les pneus, le bois, le carton, le papier, les farines animales, le sable pollué par le pétrole (cette dernière matière étant à la fois source de combustible/réducteur et de silice), le fioul. Le combustible pouvant être en excès peut également être un gaz source de soufre comme le H₂S.

On utilise un rapport molaire silice/sulfate correspondant au silicate que l'on souhaite obtenir. Ce silicate peut être représenté par la formule MₓO_{y}.n(SiO₂)dans laquelle M représente un métal alcalin ou alcalino-terreux ou une terre rare, x et y représentent des nombres positif entier ou non entier et n représente un nombre positif entier ou non entier. MₓOy peut notamment être Na₂O, K₂O, CeO₂. En général, n (rapport molaire SiO₂ / MₓO_{y}) est compris entre 1 et 4 et plus particulièrement entre 1,3 et 4, surtout lorsque M représente un métal alcalin ou alcalino-terreux. Pour le cas où M est Na, n est plus particulièrement compris entre 1,5 et 3,8. Pour le cas ou M est une terre rare comme Ce, n peut généralement être supérieur à 5 et généralement inférieur à 1000.

Dans la masse réactionnelle se trouvent au moins les phases distinctes suivantes :
- la silice solide,
- le sulfate liquide,
- le silicate liquide,
- les gaz provenant des brûleurs immergés et de la réaction de formation du silicate (pouvant contenir suivant le cas SO₂, SO₃, CO₂, H₂, H₂O, O₂, etc).

Le milieu réactionnel contient donc de nombreuses phases distinctes et la technologie des brûleurs immergés est particulièrement efficace pour les brasser vigoureusement et faire avancer la réaction.

Le sulfate liquide et le silicate liquide forment deux phases distinctes. On cherche des conditions réactionnelles (température, agitation par les brûleurs immergés, temps de séjour, excès de réducteur) telles que la phase du sulfate liquide disparaisse avant sortie du réacteur et soit de toute façon en la plus faible quantité possible pendant la fabrication. Cette quantité de sulfate résiduel est habituellement exprimé en quantité de SO₃. L'absence de sulfate en sortie du réacteur montre que celui-ci a bien réagi. Dans le cas contraire, on observe à l'oeil nu dans le silicate final des inclusions indésirables de sulfate. De plus, à chaud, il peut y avoir des projections de sulfate liquide plus ou moins explosif en sortie de fabrication. On peut généralement remédier à ce défaut en augmentant l'excès de réducteur. On peut donc déterminer la quantité minimale d'excès de réducteur par la disparition de la phase sulfate dans le silicate final. Il est inutile d'introduire un trop fort excès de réducteur car cela peut conduire à une coloration jaune-marron visible (due à la formation d'ion sulfures S²⁻ ) à l'oeil nu du silicate final, coloration qui peut ne pas être désirée. Généralement, l'excès de réducteur est compris entre une et deux fois la quantité d'excès nécessaire à la disparition de la phase sulfate. Ainsi, on introduit de préférence un excès de combustible en quantité suffisante pour que le silicate ne contienne pas d'inclusion de sulfate.

On choisi une température suffisante pour faire avancer la réaction et se traduisant par une viscosité adaptée du milieu réactionnel. En effet, si la viscosité est trop forte, la masse réactionnelle se fige et la réaction n'avance pas. Si la viscosité est trop faible, les projections sont trop importantes et cela tend à éroder les parois et la voûte et peut donc entraîner des particules étrangères indésirable dans le produit de fabrication. De plus, ce qui va sur les parois et la voûte n'est plus disponible pour réagir avec ce qui est introduit. En fait, ces deux extrêmes conduisent tous deux à une agitation trop faible des réactifs, ce qui diminue le rendement. Une agitation correcte du milieu conduit de plus à une homogénéité de température dans la masse réactionnelle. On cherche à ce que la phase silicate présente une viscosité comprise entre 50 et 3000 poises et plus particulièrement entre 100 et 1000 poises à la température du milieu réactionnel. Généralement, une température comprise entre 1000 et 1500 °C et plus particulièrement entre 1200 et 1400 °C convient.

Le silicate final est un solide translucide à la température ambiante. Il ne contient de préférence pas d'infondus, c'est-à-dire des particules de la silice initiale n'ayant pas participé à la réaction. On peut remédier à la présence d'infondus en augmentant le temps de séjour dans le réacteur.

De préférence, le réacteur de préparation du silicate est suivi d'une cuve de raffinage. Cette cuve est séparée du réacteur pour éviter les retours du silicate de la cuve vers le réacteur ainsi que la pollution de silicate en cours de raffinage par le silicate brut du réacteur. Ce raffinage procure les avantages suivants :
- éliminer les derniers infondus (particules de silice),
- éliminer le maximum de soufre du silicate final (le soufre relâché sous forme de H₂S par le silicate final est toxique et produit des odeurs indésirables)
- abaisser le redox, en pratique on vise en sortie de cuve un redox (égal au rapport massique FeO/Fe₂O₃ total dans le silicate final) inférieur à 0,5 voire inférieur à 0,4 ,
- consumer l'excès de réducteur se trouvant encore dans le silicate, ce qui revient à améliorer le rendement de la réaction de formation du silicate (on consomme le réducteur qui n'a pas réagi avec le sulfate dans le réacteur).

La cuve de raffinage est généralement équipée de moyens de chauffage comme au moins un brûleur immergé. Ce(s) brûleur(s) a une flamme plus ou moins oxydante selon le redox visé en sortie. Ces brûleurs peuvent être alimentés en gaz combustible et en air ou en oxygène avec un excès d'oxygène par rapport au gaz combustible. Au cours de cette opération de raffinage, le silicate brut s'éclaircit pour même devenir incolore et translucide. La température du silicate dans la cuve de raffinage est généralement comprise entre la même température que dans le réacteur et 150°C en dessous de la température dans le réacteur, et de préférence entre 50°C en dessous de la température dans le réacteur et 150°C en dessous de la température dans le réacteur.

La séparation entre le réacteur de fusion et la cuve de raffinage peut être une gorge ou un déversoir ou des cloisonnements sur les côtés.

La « silice » peut être amenée dans le milieu réactionnel par tout composé contenant majoritairement de la silice (oxyde de silicium) SiO₂, même s'il peut également contenir d'autres éléments, d'autres composés minoritaires, ce qui est tout particulièrement le cas lorsqu'on utilise des matériaux naturels comme le sable.

L'efficacité des brûleurs à tous les niveaux (qualité du mélange, excellent transfert thermique), fait que la conversion selon la réaction est grandement favorisée, et cela sans qu'il y ait nécessairement besoin d'atteindre des températures extrêmement élevées.

Un autre avantage des brûleurs immergés est le suivant : ils permettent l'introduction de combustibles liquides/solides de la même façon que les matières premières vitrifiables. De fait, cela conduit à l'obtention de redox variés du silicate en fusion dans le réacteur, pouvant aller de 0,1 à 0,9 selon le temps de séjour (un temps de séjour plus élevé entraîne un redox plus faible). En fait, il convient qu'à l'entrée du réacteur, à l'endroit où les différentes matières premières sont enfournées, que le redox soit relativement élevé (entre 0,35 et 0,9) car cela est favorable à la réaction de décomposition des sulfates. Après la cuve d'affinage, le redox est généralement dans le domaine 0,1 à 0,9.

Le comburant choisi pour alimenter le(s) brûleur(s) immergé(s) (réacteur et cuve d'affinage) peut être simplement de l'air. De préférence, on privilégie cependant un comburant sous forme d'air enrichi en oxygène, et même sous forme substantiellement d'oxygène seul. Une forte concentration en oxygène est avantageuse pour différentes raisons: on diminue le volume des fumées de combustion, ce qui est favorable sur le plan énergétique et évite tout risque de fluidisation excessive des matières en cours de réaction pouvant provoquer des projections sur les superstructures, notamment la voûte du réacteur dans lequel s'opère la conversion. En outre, les « flammes » obtenues sont plus courtes, plus émissives, ce qui permet un transfert plus rapide de leur énergie aux matières en cours de fusion/conversion. De plus, le cas échéant, la concentration en oxyde de soufre dans les fumées est plus grande, ce qui facilite la transformation ultérieure en acide sulfurique.

En ce qui concerne le choix du combustible pour le(s) brûleur(s) immergé(s), trois voies sont possibles, alternatives ou cumulatives : on peut choisir un combustible liquide, gazeux ou sous forme solide.

S'il est au moins partiellement sous forme gazeuse, il peut alimenter directement les brûleurs immergés. S'il est sous forme liquide, solide, on peut l'amener à proximité des brûleurs immergés.

Comme combustible gazeux, on peut citer le gaz naturel (majoritairement du méthane), du propane, de l'hydrogène, ou tout autre composé hydrocarboné et/ou soufré, notamment le H₂S (avantage du H₂S : pas de rejet de CO₂ dans l'atmosphère).

Comme combustible solide ou liquide, on peut citer tout composé majoritairement sous forme carbonée et/ou hydrocarbonée et/ou soufrée (incluant le soufre et le carbone) : comme dans le cas précédent, il peut s'agir de sous-produits de l'industrie pétrolière (fioul lourd, bitumes). Il peut aussi s'agir de matériaux à base de polymère que l'on va pouvoir ainsi recycler (tout matériau dit plastique, pneumatique, caoutchouc vulcanisés...), et même du sable souillé d'hydrocarbure, qui va aussi fournir à la fois la silice et le combustible, ce qui est une façon ingénieuse de traiter le problème de la dépollution des plages après des marées noires par exemple.

Selon l'invention, on peut notamment utiliser des combustibles contenant du soufre comme des composés soufrés comme des pneu usagés (pouvant contenir par exemple 0,5 à 4% de soufre) voire même du soufre pur. On trouve des traces de soufre dans tous les polymères vulcanisés (pneumatique), on en trouve aussi dans des sous-produits de l'industrie pétrolière, et l'invention permet de les valoriser de façon intéressante : en effet, le soufre contenu dans le combustible fourni pour faire la réaction de combustion va s'oxyder. Or, on peut transformer ces oxydes de soufre (SO₂ et/ou SO₃) en acide sulfurique, en les récupérant dans les fumées et en les traitant de façon appropriée. On a alors deux choix (alternatif ou cumulatif en fait, notamment en fonction de la quantité de H₂SO₄ fabriquée, qui dépend étroitement du taux de S choisi dans le combustible): soit on valorise H₂SO₄ comme réactif largement utilisé dans l'industrie chimique, indépendamment du procédé selon l'invention, soit on le ré-utilise selon une variante du procédé de l'invention. En effet, selon un procédé « en boucle », le produit de combustion de la réaction de formation du silicate est utilisé comme réactif pour attaquer le silicate et aboutir à de la silice précipitée. Ainsi l'invention concerne également un procédé de préparation de silice précipitée comprenant une étape a) de préparation d'un silicate selon l'une des revendications précédentes, le réacteur étant équipé d'une cheminée, laquelle est équipée d'un système de récupération des oxydes de soufre menant à de l'acide sulfurique, une étape b) d'attaque acide du silicate produit en a) par l'acide sulfurique produit en a), menant à de la silice précipitée d'une part et à au sulfate dudit élément d'autre part, ce dernier étant recyclé en a).

Il y a une autre façon, alternative ou cumulative avec la précédente, pour fabriquer du H₂SO₄ à partir du procédé selon invention : la réaction de conversion de sulfate en silicate produit elle aussi des oxydes de soufre SO₂ et/ou SO₃. On peut donc là aussi récupérer ces oxydes de soufre, et leur faire subir une réaction de conversion en acide sulfurique. Comme dans le cas précédent, on peut ré-utiliser cet acide sulfurique comme réactif vis-à-vis du silicate et/ou le valoriser comme réactif pour l'industrie chimique.

De fait, si le combustible contient une quantité significative en soufre, les réactions mises en jeu par l'invention peuvent produire plus, et même significativement plus, d'acide sulfurique que ce qui est nécessaire pour la réaction de conversion des halogénures en sulfates, ce qui valorise le procédé selon l'invention dans son ensemble.

Un premier débouché pour les silicates fabriqués selon l'invention concerne l'industrie verrière : ils peuvent se substituer, au moins pour partie, aux matières premières traditionnelles pourvoyeuses d'alcalins ou de terres rares, avec, tout particulièrement en ce qui concerne le sodium, une substitution au moins partielle du Na₂CO₃ et du sable par le silicate. On peut donc notamment employer les silicates fabriqués selon l'invention pour alimenter un four verrier. Avant transformation ultérieure, par exemple dans un four verrier, le silicate peut être transformé en granulés pour être stocké momentanément. Le four verrier peut être de conception traditionnelle (par exemple four à fusion électrique par électrodes immergées, four à brûleurs aériens fonctionnant avec des régénérateurs latéraux, four à boucle, et tout type de four connu dans l'industrie verrière incluant ainsi les fours à brûleurs immergés), avec éventuellement une conception et un mode de fonctionnement légèrement adaptés à un processus de fusion sans carbonate ou avec moins de carbonate que pour les fusions standards.

Il est à noter que certains silicates autres que le silicate de sodium sont également très intéressants à fabriquer selon l'invention. Ainsi, l'invention permet de fabriquer du silicate de potassium à partir de K₂SO₄, ce qui est, économiquement au moins, très avantageux comme matière première porteuse de Si et de K pour fabriquer des verres dits " à alcalins mixtes ", c'est-à-dire contenant à la fois Na et K. Ces verres sont notamment utilisés pour faire des écrans tactiles, des verres d'écran de télévision, des verres pour écran plasma de visualisation ("Plasma Display Panel " en anglais).

De même, l'invention permet de fabriquer de façon plus économique des verres spéciaux contenant des additifs particuliers comme des terres rares, par exemple le cérium : la présence d'oxyde de cérium conférant des propriétés anti-U.V. aux verres, et les terres rares de ce type rentrent aussi dans la composition de verres spéciaux à haut module élastique pour disque dur. L'invention permet ainsi d'avoir une matière première porteuse de Si et de Ce, le silicate de cérium, à un coût modéré.

Un second débouché pour les silicates fabriqués selon l'invention (à part être utilisés comme matières premières pour four verrier), plus particulièrement le silicate de soude, concerne l'industrie des détergents; le silicate de soude entrant fréquemment dans la composition des lessives/détergents.

Un troisième débouché pour les silicates formés selon l'invention concerne la préparation de silices particulières, désignées communément sous le terme de " silices précipitées " entrant par exemple dans la composition des bétons ou comme charge dans les caoutchoucs, notamment les pneumatiques pour véhicules, ou dans les produits alimentaires. On peut en effet opérer une attaque acide des silicates formés selon l'invention, avantageusement par de l'acide sulfurique, de manière à faire précipiter de la silice sous forme de particules ayant une granulométrie particulière: la dimension des particules visée est généralement nanométrique (0,5 à 300 nm et plus particulièrement 1 à 100 nm par exemple).

Pour mettre en oeuvre la réaction de conversion des sulfates en silicates, on peut utiliser, comme décrit dans le brevet WO-00/46161, un réacteur équipé de brûleur(s) immergé(s) et d'au moins un moyen d'introduction de la silice et/ou des sulfates sous le niveau des matières en fusion, notamment sous la forme d'une ou plusieurs enfoumeuses à vis sans fin. Il en est de même, de préférence, pour les combustibles solides ou liquides éventuellement utilisés, comme les composés carbonés et/ou hydrocarbonés et/ou soufrés (incluant le soufre solide et le carbone solide) précédemment mentionnés. On peut ainsi introduire directement au sein de la masse des produits en cours de fusion/réaction au moins ceux des réactifs de départ susceptibles de se vaporiser avant d'avoir le temps de réagir.

Le procédé selon l'invention comporte donc beaucoup d'avantages, parmi lesquels :
➢ une diminution des émissions de CO₂ dans les fours verriers qui substituent tout ou partie du carbonate de sodium par du silicate de sodium, une consommation énergétique plus faible de ces fours car on diminue ou on supprime les réactions de décarbonatation,
➢ une possibilité de faire tourner le procédé en boucle, avec ré-utilisation du sous-produit H₂SO₄ fabriqué,
➢ une possibilité de valoriser en tant que combustible des dérivés soufrés.

La figure 1 représente un dispositif de fabrication de silicate comprenant un réacteur suivi d'une cuve de raffinage.

La figure 2 est un schéma d'une variante préférée du procédé selon l'invention, fonctionnant en boucle et menant à une silice précipitée.

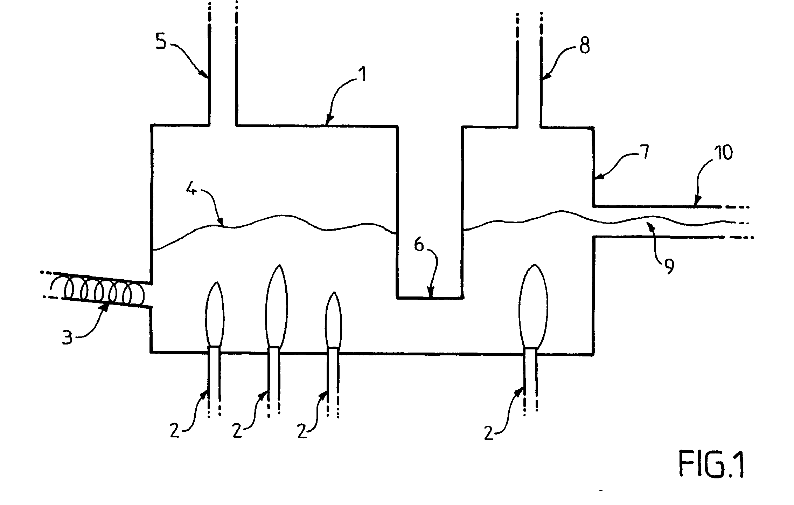

La figure 1 représente un réacteur 1 équipé de brûleurs immergés 2 et comprenant un système 3 d'introduction de matières solides (sable, sulfate, charbon, soufre, etc) sous le niveau de la masse réactionnel 4 , les fumées s'échappant par la cheminée 5. Le silicate brut passe par la gorge 6 dans la cuve d'affinage 7 également équipée d'au moins un brûleur immergé à la flamme plus oxydante que ceux du réacteur. Les fumées générées dans la cuve de raffinage s'échappent par la cheminée 8. Le silicate raffiné 9 est récupéré par le déversoir 10.

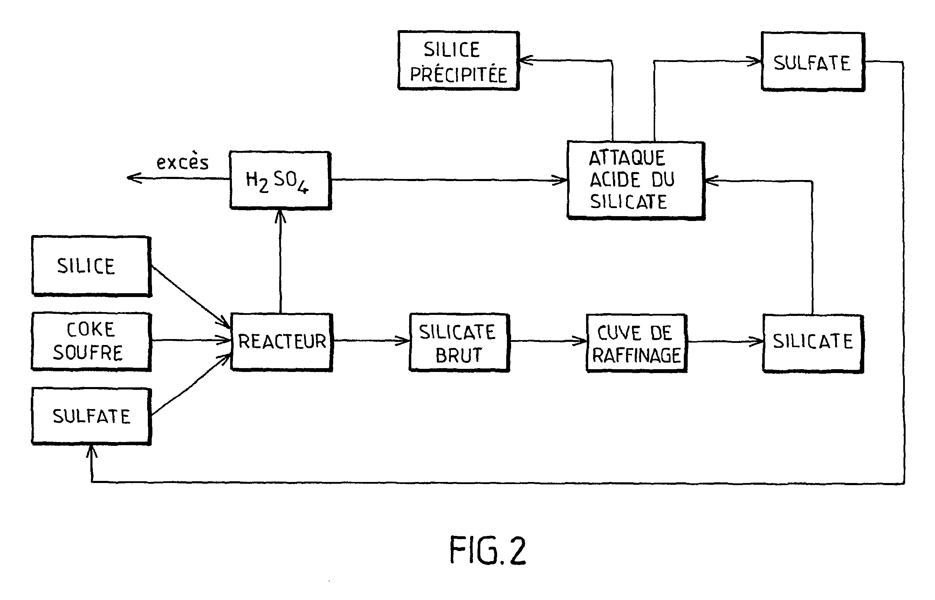

La figure 2 montre comment le silicate fabriqué selon l'invention peut être réattaqué par l'acide sulfurique produit dans le réacteur de fusion pour préparer de la silice précipité à la taille de particules calibrée. Le silicate d'une part et le sulfate d'autre part tournent en boucle dans ce procédé. L'acide sulfurique tourne lui aussi en boucle, un excédent pouvant le cas échéant être créé selon la nature du combustible et/ou réducteur utilisé.

### EXEMPLES 1

On utilise un four de fusion équipé d'un brûleur immergé suivi d'une cuve de raffinage équipée d'un brûleur immergé. Le four et la cuve sont tous deux cylindriques (axe vertical) et ont tous deux une surface au sol de 0,07 m². Les brûleurs immergés (four et cuve) fonctionnent tous deux à la stoechiométrie avec du méthane et de l'oxygène pur (l'oxygène est donc consommé entièrement dans chaque flamme de brûleur). On introduit dans le four du sable et du sulfate de sodium dans un rapport permettant l'obtention d'un silicate de sodium ayant un rapport molaire SiO₂/Na₂O de 3,5. On introduit en plus du coke, faisant office d'excès de combustible/réducteur, à hauteur de 0,5 mole de carbone par mole de sulfate introduit. La tirée est de 3 tonnes par jour et par m². Le four et la cuve fonctionnent tous deux à 1300°C. Le redox en sortie du four est de 0,7 (rapport en poids FeO/Fe₂O₃ total) et le SO₃ résiduel (SO₃ solubilisé par le silicate) est de 0,42 % en poids (mesurable en fluorescence X ou par analyseur carbone/soufre) ce qui indique que le rendement de la réaction dans le four est de l'ordre de 98%. Dans la cuve de raffinage, le sulfate résiduel va réagir avec le réducteur résiduel. En sortie de la cuve on obtient un silicate de formule Na₂O.3,5(SiO₂) translucide et incolore dont le SO₃ résiduel (dégagement de SO₃ à partir du sulfate résiduel) est inférieur à 0,05 %. Le redox est ici de 0,20.

### EXEMPLE 2

On procède comme pour l'exemple précédent, sauf que le brûleur immergé de la cuve de raffinage fonctionne en défaut d'oxygène (flamme réductrice à -15 % de débit d'oxygène par rapport à la stoechiométrie). En sortie de la cuve on obtient un silicate de formule Na₂0.3,5(SiO₂) translucide et incolore dont le SO₃ résiduel est inférieur à 0,05 %. Le redox est ici de 0,55.

### EXEMPLE 3 (comparatif)

On procède comme à l'exemple 1 sauf que l'on n'ajoute pas d'excès sous forme de coke. On retrouve dans le silicate final des inclusions visibles à l'oeil nu de sulfate de sodium. Le SO₃ résiduel est supérieur à 1%. Ceci indique un rendement de réaction bien inférieur à celui de l'exemple 1. Le sulfate introduit ne s'est pas suffisamment décomposé. L'enrichissement en silice est trop fort, la masse réactionnelle devient rapidement trop visqueuse et l'on doit arrêter le réacteur.

### EXEMPLE 4

On procède comme pour l'exemple 1 sauf que l'on remplace l'excès de réducteur sous forme de coke par un excès de réducteur sous forme de pneus usagés dont la composition est sensiblement : 2% en poids de soufre, 80% en poids de carbone, 18% en poids d'hydrogène. Ce réducteur est introduit en une quantité représentant 5% de la masse de sulfate de sodium introduit. On obtient un silicate contenant 0,1% de SO₃ résiduel et dont le redox est de 0,5. La présence de soufre dans le réducteur permet de produire de l'acide sulfurique supplémentaire.

## Revendications

1. Procédé de préparation de silicate d'un élément choisi parmi les alcalins, alcalino-terreux ou terre rare, comprenant une réaction entre de la silice et un sulfate dudit élément dans un réacteur équipé d'au moins un brûleur immergé dans une masse en fusion, ledit brûleur immergé étant alimenté par un gaz comprenant de l'oxygène, un excès de combustible réducteur étant introduit dans le réacteur par rapport à l'oxygène effectivement consommé.

2. Procédé selon la revendication précédente, **caractérisé en ce que** l'excès de combustible réducteur est un solide ou liquide source de carbone.

3. Procédé selon l'une des revendications précédentes, **caractérisé en ce que** l'excès de combustible réducteur est un solide ou liquide source de soufre.

4. Procédé selon l'une des revendications précédentes, **caractérisé en ce que** l'excès de combustible réducteur est un gaz source de soufre.

5. Procédé selon l'une des revendications précédentes, **caractérisé en ce que** la phase silicate dans la masse réactionnelle présente une viscosité comprise entre 50 et 3000 poises.

6. Procédé selon la revendication précédente, **caractérisé en ce que** la phase silicate dans la masse réactionnelle présente une viscosité comprise entre 100 et 1000 poises.

7. Procédé selon l'une des revendications précédentes, **caractérisé en ce que** la masse réactionnelle a une température comprise entre 1000 et 1500 °C.

8. Procédé selon la revendication précédente, **caractérisé en ce que** la masse réactionnelle a une température comprise entre 1200 et 1400 °C.

9. Procédé selon l'une des revendications précédentes **caractérisé en ce que** l'excès de combustible est suffisant pour que le silicate ne contienne pas d'inclusion de sulfate.

10. Procédé selon l'une des revendications précédentes, **caractérisé en ce que** l'excès de combustible représente 0,1 à 2 mole(s) d'équivalent carbone et/ou soufre par mole de sulfate.

11. Procédé selon la revendication précédente, **caractérisé en ce que** l'excès de combustible représente 0,3 à 1 mole d'équivalent carbone et/ou soufre par mole de sulfate.

12. Procédé selon l'une des revendications précédentes, **caractérisé en ce que** le réacteur est suivi d'une cuve de raffinage du silicate sortant du réacteur.

13. Procédé selon la revendication précédente, **caractérisé en ce que** la température du silicate dans la cuve de raffinage est comprise entre la même température que dans le réacteur et 150°C en dessous de la température dans le réacteur.

14. Procédé selon la revendication précédente, **caractérisé en ce que** la température du silicate dans la cuve de raffinage est comprise entre 50°C en dessous de la température dans le réacteur et 150°C en dessous de la température dans le réacteur.

15. Procédé selon l'une des revendications 12 à 14 **caractérisé en ce que** la cuve est équipée d'au moins un brûleur immergé.

16. Procédé selon l'une des revendications 12 à 15 **caractérisé en ce que** le redox du fer dans le silicate sortant de la cuve est inférieur à 0,5.

17. Procédé selon l'une des revendications précédentes **caractérisé en ce que** le silicate est de formule MₓO_{y}.n(SiO₂) dans laquelle MₓO_{y} est Na₂O ou K₂O et n représente un nombre de mole compris entre 1 et 4.

18. Procédé selon la revendication précédente, **caractérisé en ce que** n est compris entre 1,3 et 4.

19. Procédé de préparation de silice précipitée comprenant
- une étape a) de préparation d'un silicate selon l'une des revendications précédentes, le réacteur étant équipé d'une cheminée, laquelle est équipée d'un système de récupération des oxydes de soufre menant à de l'acide sulfurique,
- une étape b) d'attaque acide du silicate produit en a) par l'acide sulfurique produit en a), menant à de la silice précipitée d'une part et à au sulfate dudit élément d'autre part, ce dernier étant recyclé en a).

20. Procédé selon la revendication précédente **caractérisé en ce que** la silice précipité présente une taille comprise entre 0,5 et 300 nm.

## Claims

1. A process for preparing a silicate of an element chosen from alkali metals, alkaline-earth metals or rare earths, comprising a reaction between silica and a sulfate of said element in a reactor equipped with at least one submerged burner within a molten mass, said submerged burner being supplied with an oxygen-containing gas, an excess of reducing fuel being introduced into the reactor relative to the effectively consumed oxygen.

2. The process as claimed in the preceding claim, **characterized in that** the excess fuel/reducing agent is a solid or liquid acting as a source of carbon.

3. The process as claimed in either of the preceding claims, **characterized in that** the excess fuel/reducing agent is a solid or liquid acting as a source of sulfur.

4. The process as claimed in one of the preceding claims, **characterized in that** the excess fuel/reducing agent is a gas acting as source of sulfur.

5. The process as claimed in one of the preceding claims, **characterized in that** the silicate phase in the reaction mass has a viscosity of between 50 and 3000 poise.

6. The process as claimed in the preceding claim, **characterized in that** the silicate phase in the reaction mass has a viscosity of between 100 and 1000 poise.

7. The process as claimed in one of the preceding claims, **characterized in that** the reaction mass has a temperature of between 1000 and 1500°C.

8. The process as claimed in the preceding claim, **characterized in that** the reaction mass has a temperature of between 1200 and 1400°C.

9. The process as claimed in one of the preceding claims, **characterized in that** the excess fuel is sufficient for the silicate not to contain any sulfate inclusion.

10. The process as claimed in one of the preceding claims, **characterized in that** the excess fuel represents from 0.1 to 2 mol of carbon equivalent and/or sulfur equivalent per mole of sulfate.

11. The process as claimed in the preceding claim, **characterized in that** the excess fuel represents from 0.3 to 1 mol of carbon equivalent and/or sulfur equivalent per mole of sulfate.

12. The process as claimed in one of the preceding claims, **characterized in that** the reactor is followed by a vessel for refining the silicate output by the reactor.

13. The process as claimed in the preceding claim, **characterized in that** the temperature of the silicate in the refining vessel is between the same temperature as in the reactor and 150°C below the temperature in the reactor.

14. The process as claimed in the preceding claim, **characterized in that** the temperature of the silicate in the refining vessel is between 50°C below the temperature in the reactor and 150°C below the temperature in the reactor.

15. The process as claimed in one of claims 12 to 14, **characterized in that** the vessel is equipped with at least one submerged burner.

16. The process as claimed in one of claims 12 to 15, **characterized in that** the iron redox ratio in the silicate leaving the vessel is less than 0.5.

17. The process as claimed in one of the preceding claims, **characterized in that** the silicate is of formula MₓOy·n(SiO₂) in which MₓO_{y} represents Na₂O or K₂O and n represents a number of moles between 1 and 4.

18. The process as claimed in the preceding claim, **characterized in that** n is between 1.3 and 4.

19. A process for preparing a precipitated silica, comprising:
- a step a) of preparing a silicate as claimed in one of the preceding claims, the reactor being equipped with a stack, which is fitted with a system for recovering the sulfur oxides, resulting in sulfuric acid; and
- a step b) for the acid treatment of the silicate produced at a) with the sulfuric acid produced at a), resulting in, on the one hand, precipitated silica and, on the other hand, the sulfate of said element, said sulfate being recycled at a).

20. The process as claimed in the preceding claim, **characterized in that** the precipitated silica has a size of between 0.5 and 300 nm.

## Patentansprüche

1. Verfahren zur Gewinnung von Silikat eines aus Alkalimetallen, Erdalkalimetallen oder Seltenerdmetall ausgewählten Elements, umfassend eine Reaktion zwischen Siliciumdioxid und einem Sulfat des Elements in einem Reaktor, der mit wenigstens einem in eine Schmelze eingetauchten Brenner ausgestattet ist, wobei der eingetauchte Brenner mit einem sauerstoffhaltigen Gas beaufschlagt wird, wobei ein Überschuss an Reduktionsbrennstoff bezogen auf den tatsächlich verbrauchten Sauerstoff in den Reaktor eingeleitet wird.

2. Verfahren nach dem vorstehenden Anspruch, **dadurch gekennzeichnet, dass** der Überschuss an Reduktionsbrennstoff ein kohlenstoffhaltiger Feststoff oder eine kohlenstoffhaltige Flüssigkeit ist.

3. Verfahren nach einem der vorstehenden Ansprüche, **dadurch gekennzeichnet, dass** der Überschuss an Reduktionsbrennstoff ein schwefelhaltiger Feststoff oder eine schwefelhaltige Flüssigkeit ist.

4. Verfahren nach einem der vorstehenden Ansprüche, **dadurch gekennzeichnet, dass** der Überschuss an Reduktionsbrennstoff ein schwefelhaltiges Gas ist.

5. Verfahren nach einem der vorstehenden Ansprüche, **dadurch gekennzeichnet, dass** die Silikatphase in der Reaktionsmasse eine Viskosität im Bereich zwischen 50 und 3000 Poise aufweist.

6. Verfahren nach dem vorstehenden Anspruch, **dadurch gekennzeichnet, dass** die Silikatphase in der Reaktionsmasse eine Viskosität im Bereich zwischen 100 und 1000 Poise aufweist.

7. Verfahren nach einem der vorstehenden Ansprüche, **dadurch gekennzeichnet, dass** die Reaktionsmasse eine Temperatur im Bereich zwischen 1000 und 1500 °C aufweist.

8. Verfahren nach dem vorstehenden Anspruch, **dadurch gekennzeichnet, dass** die Reaktionsmasse eine Temperatur im Bereich zwischen 1200 und 1400 °C aufweist.

9. Verfahren nach einem der vorstehenden Ansprüche, **dadurch gekennzeichnet, dass** der Brennstoffüberschuss ausreichend ist, damit das Silikat keinen Sulfateinschluss enthält.

10. Verfahren nach einem der vorstehenden Ansprüche, **dadurch gekennzeichnet, dass** der Brennstoffüberschuss 0,1 bis 2 Moläquivalent(e) Kohlenstoff und/oder Schwefel pro Mol Sulfat ausmacht.

11. Verfahren nach dem vorstehenden Anspruch, **dadurch gekennzeichnet, dass** der Brennstoffüberschuss 0,3 bis 1 Moläquivalent Kohlenstoff und/oder Schwefel pro Mol Sulfat ausmacht.

12. Verfahren nach einem der vorstehenden Ansprüche, **dadurch gekennzeichnet, dass** sich an den Reaktor ein Behälter zum Raffinieren des den Reaktor verlassenden Silikats anschließt.

13. Verfahren nach dem vorstehenden Anspruch, **dadurch gekennzeichnet, dass** die Temperatur des Silikats in dem Raffinationsbehälter zwischen der gleichen Temperatur wie in dem Reaktor und 150 °C unter der Temperatur in dem Reaktor liegt.

14. Verfahren nach dem vorstehenden Anspruch, **dadurch gekennzeichnet, dass** die Temperatur des Silikats in dem Raffinationsbehälter zwischen 50 °C unter der Temperatur in dem Reaktor und 150 °C unter der Temperatur in dem Reaktor liegt.

15. Verfahren nach einem der Ansprüche 12 bis 14, **dadurch gekennzeichnet, dass** der Behälter mit wenigstens einem eingetauchten Brenner ausgestattet ist.

16. Verfahren nach einem der Ansprüche 12 bis 15, **dadurch gekennzeichnet, dass** der Redox des Eisens in dem aus dem Behälter kommenden Silikat unter 0,5 liegt.

17. Verfahren nach einem der vorstehenden Ansprüche, **dadurch gekennzeichnet, dass** das Silikat die Formel MₓOy.n(SiO₂) hat, worin MₓO_{y} Na₂O oder K₂O ist und n eine Molzahl zwischen 1 und 4 darstellt.

18. Verfahren nach dem vorstehenden Anspruch, **dadurch gekennzeichnet, dass** n zwischen 1,3 und 4 liegt.

19. Verfahren zur Herstellung von Fällungskieselsäure, umfassend
- einen Schritt a) zur Gewinnung eines Silikats nach einem der vorstehenden Ansprüche, wobei der Reaktor mit einem Schlot ausgestattet ist, welcher mit einem System zur Rückgewinnung der Schwefeloxide, die zu Schwefelsäure führen, ausgestattet ist,
- einen Schritt b) zum sauren Angriff des bei a) hergestellten Silikats durch die bei a) erzeugte Schwefelsäure, was zu Fällungskieselsäure einerseits und zum Sulfat des Elements andererseits führt, wobei letzteres bei a) rückgeführt wird.

20. Verfahren nach dem vorstehenden Anspruch, **dadurch gekennzeichnet, dass** die Fällungskieselsäure eine Größe im Bereich zwischen 0,5 und 300 nm aufweist.
